(19) **Europäisches Patentamt / European Patent Office / Office européen des brevets**

(11) **EP 4 250 167 A1**

(12) # DEMANDE DE BREVET EUROPEEN

(43) Date de publication:
**27.09.2023 Bulletin 2023/39**

(21) Numéro de dépôt: **22163424.9**

(22) Date de dépôt: **22.03.2022**

(51) Classification Internationale des Brevets (IPC):
**G06F 30/23** (2020.01)  **G06F 30/27** (2020.01)
**G06F 30/17** (2020.01)  **G06F 30/15** (2020.01)

(52) Classification Coopérative des Brevets (CPC):
**G06F 30/15; G06F 30/17; G06F 30/23; G06F 30/27**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Bull SAS**
**78340 Les Clayes-sous-Bois (FR)**

(72) Inventeurs:
• **GORET, Gaël**
  **38140 Réaumont (FR)**
• **BOVALO, Christophe**
  **38000 Grenoble (FR)**
• **GIORKALLOS, Alexis**
  **38210 Montaud (FR)**
• **NICOLETTI, Léo**
  **39190 Cuisia (FR)**
• **SALEM, Rami**
  **38000 Grenoble (FR)**

(74) Mandataire: **Novagraaf Technologies**
**Bâtiment O2**
**2, rue Sarah Bernhardt**
**CS90017**
**92665 Asnières-sur-Seine Cedex (FR)**

(54) **SIMULATION D'UNE CHAMBRE DE COMBUSTION PAR COUPLAGE D'UN SOLVEUR AUX GRANDES ECHELLES ET D'UN RESEAU DE NEURONES MULTICOUCHE**

(57) [Procédé de simulation de la combustion d'un fluide dans une chambre de combustion, pour la conception de ladite chambre de combustion, comportant
- la discrétisation (S1) de l'espace de la chambre en un maillage donné,
- une phase d"entrainement (S2) d'un réseau de neurones (10) au moyen d'un ensemble d'apprentissage associant un graphe correspondant au maillage dont les sommets ont pour valeur des variables de progrès prédites par une simulation de mécanique des fluides numérique (20), à des quantités de combustion locale en ces sommets;
- Une phase itérative de simulation (S3) dans laquelle
- on fournit en entrée d'un solveur (30) les valeurs prédites par le réseau de neurones (10) d'une quantité de combustion locale aux sommets du maillage, afin d'obtenir une valeur d'une variable de progrès en chaque sommet dudit maillage,
- on fournit audit réseau de neurones un graphe correspondant aux sommets du maillage, chaque sommet ayant une valeur respective de ladite variable de progrès, obtenu par ledit solveur, afin d'obtenir des valeurs prédites de la quantité de combustion locale auxdits sommets.

Fig. 3

**Description**

[DOMAINE DE L'INVENTION

La présente invention est relative à la conception et à la fabrication industrielle de chambres de combustion, notamment pour des véhicules aériens tels que des hélicoptères. Elle vise en particulier à améliorer la simulation de telles chambres de combustion afin de permettre l'amélioration de leurs performances.

CONTEXTE DE L'INVENTION

Les machines tournantes thermodynamiques visent à produire de l'énergie mécanique sous la forme de la rotation d'un arbre, directement à partir de l'énergie cinétique des gaz produits par la combustion d'un hydrocarbure (fioul, gaz combustible, etc.) qui subissent une détente dans une turbine. Le comburant, le plus souvent de l'air ambiant, est généralement comprimé avant de pénétrer dans la chambre de combustion, en utilisant un compresseur rotatif entraîné par le même arbre que la turbine. Ce dernier peut être de type axial, avec plusieurs étages de compresseurs disposés l'un à la suite de l'autre sur un axe, ou centrifuge, d'un grand diamètre et expulsant l'air comprimé par les extrémités.

Ces machines, typiquement des turbomoteurs, peuvent être employées dans différents cas d'usage, comme la propulsion de véhicules telles que des hélicoptères, des navires, ou en tant que turbines, dans des centrales électriques par exemple.

La conception de la chambre de combustion revêt un caractère critique car elle est soumise à des contraintes thermodynamiques fortes (hautes températures...). En outre, dans le cas de véhicules, notamment aériens, elles sont soumises à des contraintes de poids impactant le choix des matériaux.

Les paramètres de conception (dimensions, forme...) de la chambre de combustion forment un espace de possibilités important qui, en pratique, fait que les chambres de combustion ne sont pas conçues de façon optimale.

Afin d'améliorer la situation, des mécanismes de simulation ont été mis en œuvre, afin de permettre de parcourir tout ou partie de l'ensemble des possibilités afin de déterminer les paramètres de conception

Ces mécanismes nécessitent la simulation du comportement de la combustion des fluides afin de déterminer son impact sur la chambre de combustion, ce comportement étant lui-même influencé par les paramètres de conception de la chambre.

Différents outils de simulation ont été proposés afin d'estimer l'impact de chaque choix de conception et d'ainsi explorer un plus grand nombre de possibilités qu'il ne serait envisageable de faire en tests réels. Il est notamment possible de déterminer l'impact de chaque choix de conception de la chambre de combustion en y simulant le comportant de la combustion, et d'en tirer des conclusions sur le coût de fabrication de la chambre, sur la performance de la combustion, sur la consommation de carburant, sur l'usure de la chambre dans le temps, etc.

Dans l'ingénierie manufacturière, ce processus itératif s'appelle la conception générative (ou « *generative design* » en langue anglaise).

Les outils de simulation numérique peuvent mettre en œuvre des techniques de mécanique des fluides numérique, CFD (pour « *Computational Fluid Dynamics* » en langue anglaise). On peut par exemple citer les logiciels commercialisés par la société Dassault Systèmes, tels que le produit logiciel « Simulia ». On peut également citer le logiciel « Flow Simulator » de la société HyperWorks, avec différents modules de simulation physique (« elsA » produit par l'ONERA, « Su2 » de l'université de Stanford, etc.), ou encore le logiciel AVBP développé par le CERFACS (Centre Européen de Recherche et de Formation Avancée en Calcul Scientifique).

La mécanique des fluides numérique (CFD) consiste à étudier les mouvements d'un fluide (par exemple l'air) et leurs effets par la résolution numérique des équations régissant le fluide. En fonction des approximations choisies, qui sont en général le résultat d'un compromis en termes de besoins de représentation physique par rapport aux ressources de calcul ou de modélisation disponibles, les équations résolues peuvent être les équations d'Euler, les équations de Navier-Stokes, etc.

Ces outils impliquent toutefois des temps de calcul très importants, qui ne permettent pas de parcourir efficacement l'ensemble des possibilités et ne permettent donc de déterminer les paramètres optimaux pour la conception d'une chambre de combustion.

Des solutions ont été proposées en déportant le calcul de simulation vers l'utilisation de modèles prédictifs à temps constants comme les réseaux de neurones profonds.

On peut par exemple citer l'article de Corentin J. Lapeyre, Antony Misdariis, Nicolas Cazard, Denis Veynante, et Thierry Poinsot, « Training convolutional neural networks to estimate turbulent sub-grid scale reaction rates » (2019) Combustion and Flame, 203. 255-264. ISSN 0010-2180.

Cet article propose l'utilisation d'un réseau de neurones convolutif (CNN pour « *Convolutional Neural Network* » en anglais), en collaboration avec un outil conventionnel mettant en œuvre une simulation de mécanique des fluides numérique.

En pratique, ces derniers (appelés généralement « solveurs ») travaillent sur une discrétisation adaptative de l'espace étudié, les points de calcul formant un maillage plus dense dans les lieux où les données calculées varient plus fortement, et, *a contrario*, plus lâche lorsque les données varient peu (c'est-à-dire plus loin de là où la combustion a lieu). Or, les réseaux de neurones fonctionnent généralement, et en particulier les réseaux convolutifs, sur un maillage fixe.

Il s'en suit que les méthodes de l'état de la technique, et notamment celle exposée dans l'article ci-dessus, nécessitent des étapes d'interpolation et réinterpolation afin de passer de l'espace de travail du solveur vers celui du réseau de neurones et vice-versa, à chaque itération d'un processus itératif.

Ces étapes d'interpolation sont coûteuses en termes de traitement numérique et absorbent une grande partie du temps de calcul gagné par l'utilisation des réseaux de neurones.

En outre, elles peuvent générer des imprécisions qui peuvent nuire à la convergence du processus itératif et à la précision du résultat simulé.

Dans de nombreux cas, même, l'interpolation n'est pas possible. En effet, le réseau de neurones apprend une physique à une échelle donnée. Si le maillage est irrégulier, on doit projeter (ou interpoler) celui-ci vers un maillage régulier. Or, cela revient à choisir les mailles les plus fines du maillage irrégulier et à subdiviser les maillages les plus grandes. Ce faisant, un nombre immense de mailles doit être ajouté dans les zones simples, ce qui rend la taille du maillage prohibitif.

RESUME DE L'INVENTION

Un objectif de la présente invention est d'améliorer la situation en permettant, notamment, de diminuer le temps de calcul nécessaire à la simulation et d'améliorer la précision de celle-ci.

Il est ainsi possible, en un temps identique, de tester un plus grand nombre de possibilités des paramètres de conception de la chambre de combustion, et donc d'obtenir statistiquement une meilleure solution ; ou bien d'obtenir un jeu de paramètre optimal en un temps plus court. D'une façon générale, on peut ainsi obtenir des meilleures performances pour les chambres de combustion ainsi réalisées.

À cette fin, selon un premier aspect, la présente invention peut être mise en œuvre par un procédé de simulation de la combustion d'un fluide dans une chambre de combustion, pour la conception de ladite chambre de combustion, comportant

- la discrétisation de l'espace de ladite chambre de combustion en un maillage donné,

- une phase d''entrainement d'un réseau de neurones multicouche au moyen d'un ensemble d'apprentissage associant un graphe correspondant audit maillage donné dont les sommets ont pour valeur des variables de progrès prédites par une simulation de mécanique des fluides numérique, à des quantités de combustion locale auxdits sommets, et selon une fonction de coût configurée pour minimiser une erreur entre la sortie dudit réseau de neurones et lesdites quantités de combustion locale ;

- Une phase itérative de simulation de ladite combustion dans laquelle, à chaque itération,

- on fournit en entrée d'un solveur les valeurs prédites par ledit réseau de neurones multicouche d'une quantité de combustion locale aux sommets dudit maillage donné, afin d'obtenir une valeur d'une variable de progrès en chaque sommet dudit maillage donné,

- on fournit audit réseau de neurones multicouche un graphe correspondant aux sommets dudit maillage donné, chaque sommet ayant une valeur respective de ladite variable de progrès, obtenu par ledit solveur, afin d'obtenir des valeurs prédites de ladite quantité de combustion locale auxdits sommets.

Suivant des modes de réalisation préférés, l'invention comprend une ou plusieurs des caractéristiques suivantes qui peuvent être utilisées séparément ou en combinaison partielle entre elles ou en combinaison totale entre elles :

- ladite quantité de combustion locale est approximée par une densité surfacique de flamme.

- le procédé comporte une étape de discrétisation dudit espace en un second maillage, substantiellement plus fin que ledit maillage donné, et ladite phase d'entrainement comprend une simulation numérique directe de ladite combustion, afin d'obtenir lesdites variables de progrès et lesdites quantités de combustion locale aux sommets dudit second maillage, puis un filtrage afin d'obtenir lesdites variables de progrès et lesdites quantités de combustion locale aux sommets dudit maillage donné.

- les nœuds dudit graphe correspondent aux sommets dudit maillage donné.

- ledit solveur effectue une simulation aux grandes échelles

- ledit réseau de neurones multicouche prend en compte ledit graphe en calculant l'état d'un neurone à partir des états des neurones d'un voisinage déterminé par ledit graphe.

- l'état d'un neurone est calculé en fonction d'une influence desdits neurones voisins variable selon lesdits neurones voisins.

- le procédé comporte en outre une étape de détermination d'un ensemble de paramètres de conception de ladite chambre de combustion à partir des résultats de ladite phase itérative de simulation pour une pluralité d'ensemble de paramètres de conception envisagés.

Selon un second aspect, l'invention peut également être mise en œuvre par un dispositif de simulation de la combustion d'un fluide dans une chambre de combustion, pour la conception de ladite chambre de combustion, comportant

- des moyens pour la discrétisation de l'espace de ladite chambre de combustion en un maillage donné,

- des moyens pour entrainer un réseau de neurones multicouche au moyen d'un ensemble d'apprentissage associant un graphe correspondant audit maillage donné dont les sommets ont pour valeur des variables de progrès prédites par une simulation de mécanique des fluides numérique, à des quantités de combustion locale auxdits sommets, et selon une fonction de coût configurée pour minimiser une erreur entre la sortie dudit réseau de neurones et lesdites quantités de combustion locale ;

- un solveur adapté pour recevoir en entrée les valeurs prédites par ledit réseau de neurones multicouche d'une quantité de combustion locale aux sommets dudit maillage donné, afin d'obtenir une valeur d'une variable de progrès en chaque sommet dudit maillage donné,

- ledit réseau de neurones multicouche étant adapté pour recevoir en entrée un graphe correspondant aux sommets dudit maillage donné, chaque sommet ayant une valeur respective de ladite variable de progrès, obtenu par ledit solveur, afin d'obtenir des valeurs prédites de ladite quantité de combustion locale auxdits sommets.

D'autres caractéristiques et avantages de l'invention apparaîtront à la lecture de la description qui suit d'un mode de réalisation préféré de l'invention, donnée à titre d'exemple et en référence aux dessins annexés

BREVE DESCRIPTION DES FIGURES

Les dessins annexés illustrent l'invention :

La figure 1 représente schématiquement un exemple de chambre de combustion.

La figure 2 illustre très schématiquement un réseau de neurones.

La figure 3 représente un organigramme d'un procédé selon un mode de réalisation de l'invention.

La figure 4 illustre un exemple de maillage irrégulier.

La figure 5 représente une vue schématique fonctionnelle d'une phase d'entraînement d'un réseau de neurones multicouche selon un mode de réalisation de l'invention.

La figure 6 représente une vue schématique fonctionnelle d'une phase itérative de simulation selon un mode de réalisation de l'invention.

DESCRIPTION DETAILLEE DE MODES DE REALISATION DE L'INVENTION

Un des buts de l'invention est d'améliorer, en la rendant plus efficace, la simulation des phénomènes de combustion, et notamment de combustion turbulente, dans des chambres à combustion, afin de permettre l'optimisation des différents paramètres de conception (dimensions, forme, matériaux...) de cette chambre et, possiblement, des autres paramètres de la combustion (mélange de carburant...).

Comme évoqué précédemment, des chambres de combustion peuvent être utilisées pour la propulsion de véhicules telles que des hélicoptères, des navires, ou en tant que turbines, dans des centrales électriques par exemple. Ces chambres de combustion peuvent être notamment utilisés dans des turbomoteurs ou autres machines tournantes thermodynamiques, ou turbomachines.

Les paramètres à optimiser dépendent du cas d'usage et doivent donc être déterminés à nouveau pour chaque nouvelle application.

La conception de la chambre de combustion revêt un caractère critique car elle est soumise à des contraintes thermodynamiques fortes (hautes températures...). En outre, dans le cas de véhicules, notamment aériens, elles sont soumises à des contraintes de poids impactant le choix des matériaux.

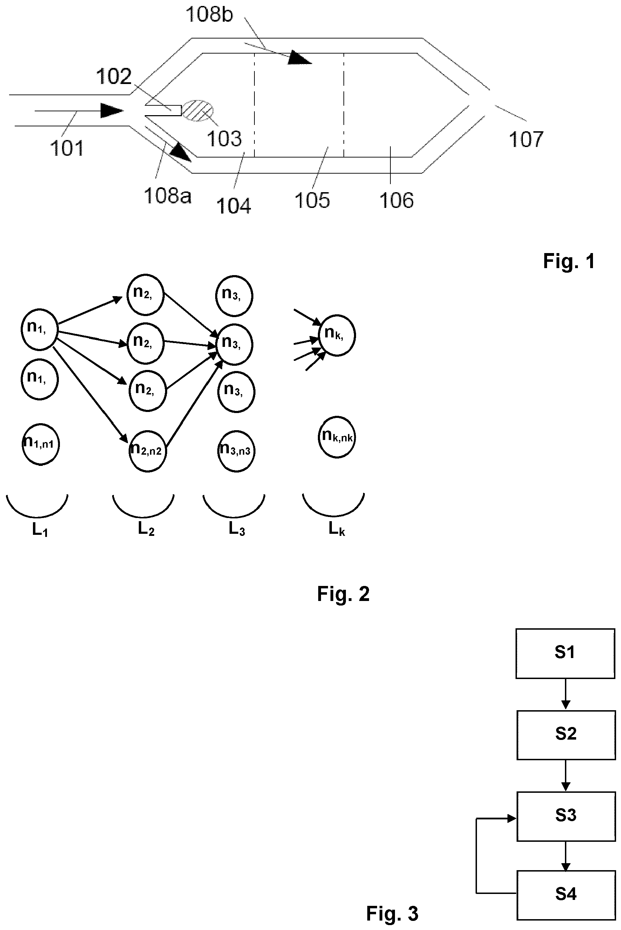

La figure 1 représente schématiquement une chambre de compression possible, à titre illustratif uniquement et sans perte de généralité. D'autres architectures de chambres sont également possibles, selon notamment l'application visée, notamment des chambres annulaires.

La flèche 101 représente l'air comprimé qui sort d'un compresseur, non représenté. Il se scinde en deux courants, l'un, 108a, 108b qui assure le refroidissement des parois, l'autre qui pénètre directement dans la chambre de combustion, 104, 105, 106, où il sert de comburant au combustible injecté en partie centrale par un injecteur 102.

La chambre de combustion est prévue pour que l'air soit en faible excès, de sorte que la flamme 103 atteint une haute température (typiquement jusqu'à 2500 K dans la zone primaire 104.

Par des trous disposés en périphérie de la chambre, l'air extérieur revient (flèche 108b) se mélanger aux gaz brûlés dans la zone transitoire 105, où la température redescend jusqu'à environ 2000 K, puis dans la zone de dilution 106, où l'on cherche à réaliser un flux de gaz de température aussi stable que possible pour éviter les risques de surchauffe locale ou momentanée.

L'air est ensuite éjecté vers une turbine 107,

Cet exemple de chambre de combustion est donné à titre purement illustratif. D'autres types de chambres de combustion existent (chambres à silos, chambres annulaires...), auxquelles l'invention peut également tout à fait s'appliquer.

La combustion au sein d'une chambre de combustion est un phénomène extrêmement complexe. De nombreux paramètres influent fortement sur le rendement de la combustion, l'usure des matériaux constitutifs de la chambre, etc. Parallèlement, de nombreuses contraintes extérieures pèsent également sur la conception de la chambre de combustion, liés notamment à l'application visée. Ainsi, une chambre à combustion embarqué sur un hélicoptère, par exemple, doit répondre à des contraintes de dimensionnement et de poids.

D'une façon générale, une chambre de combustion doit satisfaire des contraintes générales sévères :

- assurer une combustion complète du combustible ;

- réduire les émissions de polluants ;

- minimiser la perte de charge (qui représente un surcroît de compression) ;

- assurer une bonne stabilité de la température à l'entrée de la turbine ;

- occuper un volume aussi réduit que possible tout en permettant un bon refroidissement des parois.

Dès lors, la conception (en vue de la fabrication) d'une chambre à combustion pour une application donnée passe par une phase de simulation, assistée par ordinateur, afin d'en définir les différents paramètres. On peut simuler différents jeux de paramètres (combustible, forme, taille de la chambre, etc.) afin d'*in fine* choisir un jeu satisfaisant. La chambre à combustion pourra alors être conçue (et passer en production) sur la base de ce jeu de paramètres.

La simulation selon l'invention est automatisée par des outils informatiques utilisant des technologies algorithmiques différentes. Elle repose sur un couplage entre un solveur et un réseau de neurones multicouche particulièrement adapté.

Un solveur est un outil logiciel adapté pour résoudre un problème de simulation numérique. Celui-ci peut s'interfacer avec une plateforme de simulation qui offre d'autres fonctionnalités, comme l'agrégation de plusieurs solveurs (chacun adaptés à des problématiques spécifiques), des outils de visualisation, des interface homme-machine, des outils d'exportation, des outils de discrétisation de l'espace d'étude, etc.)

Un exemple de solveur est le solveur « simpleFOAM » qui peut être utilisé sur la plateforme ouverte « OpenFOAM ». Le logiciel et sa documentation sont disponibles sur le site web du projet : https://www.openfoam.com.

D'autres plateformes pour la simulation CFD existent comme notamment les logiciels commercialisés par la société Dassault Systèmes, tels que le produit logiciel « Simulia ». On peut également citer le logiciel « Flow Simulator » de la société HyperWorks, avec différents modules de simulation physique, ou solveurs :« elsA » produit par l'ONERA, « Su2 » de l'université de Stanford, etc.

Ces différentes plateformes logicielles mettent en œuvre des techniques de mécanique des fluides numérique, CFD (pour « *Computational Fluid Dynamics* » en langue anglaise) afin de déterminer les interactions d'un fluide avec son environnement, et, en particulier lors d'une combustion.

La mécanique des fluides numérique, CFD, consiste à étudier les mouvements d'un fluide (ici un mélange de comburant et de carburant) et leurs effets par la résolution numérique des équations régissant le fluide. En fonction des approximations choisies, qui sont en général le résultat d'un compromis en termes de besoins de représentation physique par rapport aux ressources de calcul ou de modélisation disponibles, les équations résolues peuvent être les équations d'Euler, les équations de Navier-Stokes, etc.

Par ailleurs, selon l'invention, la simulation de la combustion se base également sur l'utilisation d'un réseau de neurones multicouche.

D'une façon très macroscopique, les réseaux de neurones multicouches peuvent être vus comme des boîtes noires dont les paramètres internes doivent être ajustés lors d'une phase d'apprentissage, ou d'entrainement, en leur présentant à la fois des données d'entrée et une sortie souhaitée (ou « étiquette »). L'erreur entre cette sortie souhaitée et la sortie « naturelle » du réseau permet d'ajuster légèrement les paramètres pour diminuer l'erreur. En présentant un grand nombre de ces couples « données d'entrée / sorties souhaitée », le réseau apprend à réagir correctement et à fournir une bonne sortie lorsqu'on lui présente de nouvelles données d'entrée, non étiquetées.

Selon l'invention, le réseau de neurones utilisé est un réseau de neurones multicouche.

La figure 2 illustre un exemple très simplifié de réseau de neurones multicouche.

Un réseau de neurones multicouche (ou « *multilayer neural network* », MNN, en anglais) est un type de réseau neuronal artificiel organisé en plusieurs couches au sein desquels une information circule de la couche d'entrée L1 vers la couche de sortie Lk uniquement ; il s'agit donc d'un réseau à propagation directe (« *feedforward* »). Chaque couche L1, L2, L3... Lk est constituée d'un nombre variable de neurones, respectivement n1, n2, n... nk. Les neurones de la dernière couche (dite « de sortie ») sont les sorties du réseau de neurones et représentative d'une prédiction du modèle en réponse à une entrée fournie sur la couche L1. Les couches entre la couche d'entrée L1 et la couche de sortie Lk sont dites « couches cachées » puisqu'elles ne disposent normalement pas d'interfaces avec l'extérieur.

Dans un réseau multicouche, chaque neurone $n_{i,j}$ est potentiellement connecté en sortie à la totalité des neurones de la couche suivante $L_{i+1}$. Inversement, il reçoit en entrée les sorties de la totalité des neurones de la couche précédente $L_{i-1}$. Sur la figure 2, par clarté, seules quelques connexions sont représentées par des flèches orientées.

Chaque connexion est associée à un poids. L'ensemble des poids forment les paramètres internes du réseau de neurones. Ils doivent être déterminés lors d'une phase d'apprentissage (ou entrainement) et permettent ensuite de prédire des valeurs de sortie, par généralisation, à partir d'un nouveau vecteur d'entrée présenté sur la couche d'entrée $L_1$.

Chaque neurone $n_{i,j}$ effectue, classiquement, une somme pondérée de ces entrées par les poids des connexions associées puis applique à cette somme une fonction d'activation.

Plusieurs techniques existent pour déterminer les paramètres internes du réseau, les seuils, par apprentissage. On peut notamment citer l'algorithme de la descente du gradient stochastique (DGS ou SGD en anglais pour « Stochastic Gradient Descent »), décrit par exemple dans LeCun, Yann A., et al. "Efficient backprop. Neural networks: Tricks of the trade", Springer Berlin Heidelberg, 2012. 9-48. On peut également citer ADAM, décrit initialement dans Diederik P. Kingma and Jimmy Lei Ba. "Adam: A method for stochastic optimization". 2014. arXiv:1412.6980v9, ou bien RMSprop, décrit notamment dans Tijmen Tieleman et Geoffrey Hinton, « Lecture 6.5-rmsprop: Divide the gradient by a running average of its recent magnitude », COURSERA: neural networks for machine learning, 4(2):26-31, 2012.

Un des aspects de l'invention consiste à permettre l'apprentissage et la détermination de tout ou partie des paramètres du réseau de neurones multicouche.

En particulier, un couplage entre le réseau de neurones multicouche et une simulation conventionnelle basée sur la mécanique des fluides numérique (CFD) permet de déterminer des paramètres du réseau de neurones, par apprentissage, ainsi qu'il sera vu plus loin.

Les paramètres du réseau de neurones comprennent notamment :

- les paramètres internes, ou poids, ou encore poids synaptiques, associés aux connexions entre neurones, et étant déterminés de façon itérative par l'apprentissage (ou entrainement) ;

- des méta-paramètres déterminant l'architecture du réseau de neurones : nombres de couches, nombres de neurones dans chaque couche, etc.

- les données de l'ensemble d'apprentissage, qui permettent la détermination des poids ;

- la fonction de coût qui permet d'estimer l'erreur en sortie du réseau de neurones et déterminer, par rétropropagation, les ajustements à apporter aux poids du réseau pour chaque donnée de l'ensemble d'apprentissage ;

- les noyaux de convolution, dans le cas d'un mode de réalisation basé sur des réseaux neuronaux convolutifs.

En général, la phase d'apprentissage vise à déterminer, par convergence, les valeurs des poids synaptiques. Pour un réseau donné, l'ensemble de ces valeurs forme une modélisation représentative de l'ensemble d'apprentissage.

Une fois l'apprentissage achevé, les poids synaptiques sont fixés, et sur la base de cette modélisation, le réseau de neurones peut être utilisé en prédiction en lui soumettant des nouveaux vecteurs d'entrée (non présent dans l'ensemble d'apprentissage) afin qu'il génère, ou « prédise », un vecteur de sortie.

La figure 3 représente un organigramme illustratif d'un procédé selon un mode de réalisation de l'invention qui vise à simuler, à l'aide d'outils informatiques, la combustion d'un fluide dans une chambre à combustion.

Cet organigramme simplifié représente les étapes de façon séquentielle pour la clarté de l'exposé, mais, selon des variantes, les étapes peuvent potentiellement être ordonnées différemment, et notamment, entrelacées.

Dans une étape S1, le procédé de simulation comprend une discrétisation de l'espace de la chambre de combustion en un maillage donné.

Il est connu en soi de prévoir une telle étape dans la mesure où les différents solveurs et les outils de mécanique des fluides numériques, CFD, fonctionnent sur ce principe général de discrétisation de l'espace étudié. L'enjeu est alors de considérer des valeurs d'entrée aux sommets du maillage et de déterminer des valeurs de sortie, simulées, sur ces mêmes sommets.

D'une façon générale, dans la modélisation numérique de la dynamique des fluides, CFD, de petites cellules ou éléments sont créés pour remplir le volume dans lequel on veut simuler l'écoulement ou, ici, la combustion. Ils constituent un maillage où chaque cellule représente un espace discret qui représente localement le phénomène physique. Les équations mathématiques qui représentent la physique sont ensuite appliquées à chaque cellule du maillage. La génération d'un maillage de haute qualité est extrêmement importante pour obtenir des solutions fiables et garantir la stabilité numérique.

De nombreux articles sont disponibles sur ce sujet du maillage de l'espace de simulation. On pourra, à titre d'exemple, consulter le chapitre 6, « Computational Meshing for CFD Simulations » de A. Lintermann, dans l'ouvrage collectif « Clinical and Biomedical Engineering in the Human Nose - A Computational Fluid Dynamics Approach », Singapore : Springer Nature Singapore Pte Ltd. 2021, Biological and Medical Physics, Biomedical Engineering 85-115 (2020)

Lorsque le phénomène physique n'est pas homogène dans l'espace statique, le maillage peut être également non homogène, c'est-à-dire présenter des sommets plus rapprochés dans les lieux où le phénomène est le moins homogènes et des sommets plus espacés dans les lieux de plus grande homogénéité du phénomène physique simulé.

En général, ces informations sont connues à l'avance et le maillage peut donc être prévu à l'avance. Par exemple, dans le cadre d'une combustion, le maillage peut être plus fin à proximité de la flamme et sur les parois de la chambre, et plus lâche en d'autres endroits.

Comme on le verra plus loin, un des avantages de l'invention est de permettre un maillage relativement lâche tout en conservant des propriétés de précision et de convergence des techniques de mécanique des fluides numérique.

Le procédé de simulation comporte également une phase d"entrainement, S2, d'un réseau de neurones multicouche.

Comme vu précédemment, cette étape vise à fixer des paramètres internes du réseau de neurones afin que celui-ci modélise un phénomène reflété par l'ensemble d'apprentissage pour voir ensuite être utilisé en prédiction. Pour ce faire, l'ensemble d'apprentissage doit être préparé de façon approprié.

D'une façon générale, un ensemble d'apprentissage associe un vecteur d'entrée (qui correspond à ce qui est fourni à la couche d'entrée du réseau de neurones) à un vecteur de sortie souhaité (ou étiquette), qui est comparé, au moyen d'une fonction de coût (ou « *loss function* » en anglais) à la sortie effective du réseau de neurones.

Selon l'invention, cet ensemble d'apprentissage associe un graphe correspondant au maillage, dont les sommets ont pour valeurs des variables de progrès, à des quantités de combustion locale en ces sommets.

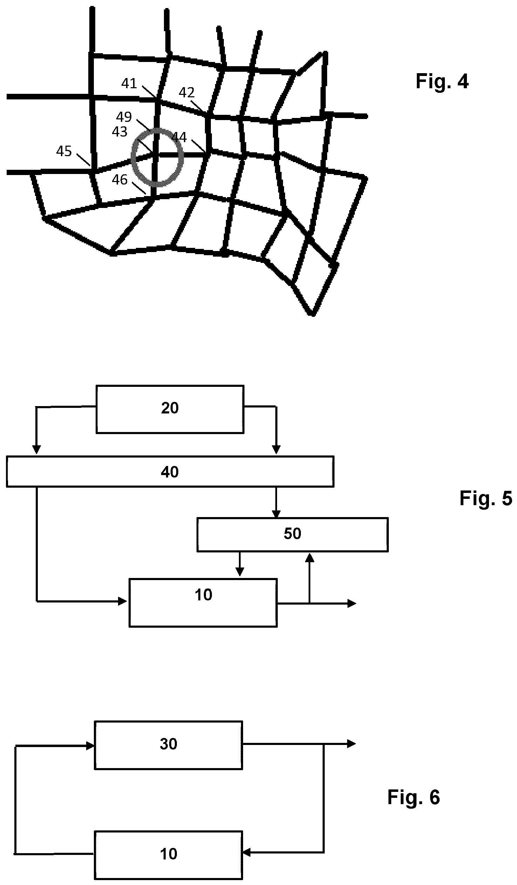

La figure 4 illustre un exemple de maillage. Par soucis de clarté de la figure, ce maillage est représenté en deux dimensions, mais dans le cas général, un maillage tridimensionnel est prévu afin de couvrir l'ensemble de l'espace simulé.

Ce maillage est irrégulier car adaptatif : il est plus resserré, ou fin, lorsque la physique simulée est plus complexe, c'est-à-dire implique de plus grandes variations de valeur dans l'espace. Cela peut être dû à des turbulences, à la combustion, etc.

À chaque sommet 41, 42, 43, 44, 45, 46 correspond une valeur d'une variable de progrès.

Les variables de progrès forment l'objet de la simulation et sont représentatives de l'état d'avancement de la combustion (elles sont parfois également nommées « variables d'avancement »)

L'évolution des variables de progrès permet d'estimer ainsi la qualité de la combustion dans le temps. En jouant sur les paramètres de la chambre de combustion, l'évolution des variables de progrès est modifiée, de sorte que l'étude de cette dernière permet d'estimer si les paramètres de la chambre de combustion choisi correspondent ou non aux besoins.

Différentes variables de progrès peuvent être utilisées, du moment qu'elles permettent d'estimer une qualité de combustion, et donc, *in fine*, de définir les paramètres de la chambre de combustion.

Un panorama assez complet sur la notion de variable de progrès peut être trouvé dans la thèse d'Aimad Er-Raiy, « Étude des processus élémentaires impliqués en combustion à volume constant », ISAE-ENSMA École Nationale Supérieure de Mécanique et d'Aérotechnique - Poitiers, 2018, NNT : 2018ESMA0019, tel-02080286.

On peut par exemple utiliser comme variable de progrès c pour des gaz adiabatiques :

$$ c = \frac{T - T_u}{T_b - T_u} $$

où $T_u$ est la température des gaz frais, $T_b$ la température des gaz brûlés et T la température local des gaz.

On observe que c=0 pour les gaz frais et c=1 pour les gaz brulés ; c=0.5 correspond aux lieux de probabilité maximale du front de flamme. L'iso-contour à c=0.5 peut donc représenter ce front de flamme.

On associe également à ces sommets une quantité de combustion locale. Cette quantité de combustion locale est représentative du comportement de la combustion à proximité du sommet correspondant.

Cette quantité de combustion peut être approximée par une densité de surface de flamme (DSF, ou FSD pour « *Flame Surface Density* » en anglais).

On appelle densité de surface de la flamme Σ la mesure de la surface de flamme disponible par unité de volume. Elle a été définie dans S. B. Pope, « The evolution of surfaces in turbulence », in International journal of engineering science, 26(5):445-469, 1988.

Les quantités de combustion et les variables de progrès représentent les phénomènes de combustion locaux. Leurs valeurs sont assignées à un sommet et elles peuvent être considérés comme valables dans une zone substantiellement inférieure à la taille du maillage autour du sommet considéré.

Ainsi, sur la figure 4, une zone 49 est représentée pour le sommet 43. La taille de cette zone 49 est substantiellement inférieure à la distance qui sépare, dans l'espace, le sommet 43 des sommets voisins 41, 42, 44, 45, 46... Cette zone a un plus grand rayon substantiellement inférieur à la distance du sommet 43 à son plus proche voisin.

Les valeurs et quantités utilisées pour l'apprentissage sont fournies par un simulateur de mécanique des fluides numériques, CFD.

En particulier, une approche de simulation numérique directe peut être utilisée (DNS pour « *Direct Nu-*

*merical Simulation* » en anglais).

Le terme de simulation numérique directe a été introduit pour la première fois dans Orszag, Steven A. (1970), "Analytical Theories of Turbulence", Journal of Fluid Mechanics, 41 (1970): 363-386. Il désigne une méthodologie de simulation de mécanique des fluides numériques, CFD, dans laquelle les équations de Navier-Stokes sont résolues numériquement.

Ce type de simulation présente l'avantage d'être très précis puisque n'impliquant aucune simplification du modèle ou réduction de données, mais cette précision a pour contrepartie un coût calculatoire qui, d'une façon générale, la cantonne à des utilisations académiques.

En effet, on peut estimer que le nombre d'opérations numériques (à virgule flottante) pour une simulation est proportionnel au nombre de points dans le maillage et au nombre d'itérations dans la simulation. Ce nombre d'opération croit avec le cube du nombre de Reynolds, qui caractérise l'inertie et la viscosité propres à un fluide. Plus ce nombre est élevé et plus le fluide en combustion tend à générer des turbulence. Pourtant, même avec un nombre de Reynolds bas, le coût calculatoire d'une simulation de type DNS est donc extrêmement élevé.

La page Wikipédia consacrée fournit des informations supplémentaires sur ce type de simulation : https://en.wikipedia.org/wiki/Direct numerical simulation

Parmi les outils disponibles pouvant effectuer des simulations numériques directes, les outils précédemment évoqués proposent des modules adaptés, notamment les logiciels commercialisés par la société Dassault Systèmes, tels que le produit logiciel « Simulia ». On peut également citer le logiciel « Flow Simulator » de la société HyperWorks, avec différents modules de simulation physique (« elsA » produit par l'ONERA, « Su2 » de l'université de Stanford, etc.), ou encore le logiciel AVBP développé par le CERFACS (Centre Européen de Recherche et de Formation Avancée en Calcul Scientifique).

Selon un mode de réalisation de l'invention, la simulation numérique directe est effectuée sur un maillage substantiellement plus fin que celui utilisé pour l'apprentissage du réseau de neurones. Autrement dit, deux maillages peuvent être utilisés.

Ce maillage fin permet de tirer profit de la précision inhérente à une simulation numérique directe.

La figure 5 illustre la phase d'entrainement S2 du réseau de neurones 10. Cette figure représente de façon schématique les différentes fonctions mises en œuvre par cette phase d'entrainement (ou apprentissage).

Ces fonctions peuvent être mises en œuvre par des modules logiciels, ou outils, distincts, selon des modes de réalisation de l'invention. Certaines fonctions peuvent au contraire être regroupées dans un même module, ou outil, logiciel.

La référence 20 représente la simulation numérique directe.

Les données fournies par la simulation numérique directe comprennent une valeur de progrès et une quantité de combustion locale (approximée par exemple par une densité de surface de flamme) pour chaque point d'un maillage fin.

Ces données sont ensuite filtrées par une fonction de filtrage (ou sous-échantillonnage) 40, afin de constituer un maillage plus grossier. Les termes « fin » et « grossier » sont relatifs à la distance entre deux sommets consécutifs du maillage. Le maillage plus grossier correspond à une échelle typiquement utilisé dans les simulations aux grandes échelles (ou LES pour « Large Eddy Simulation » en anglais).

Selon un mode de réalisation, un facteur 8, selon chaque dimension, peut être utilisé entre ces deux maillages. Par exemple, le maillage le plus fin (utilisé pour la simulation numérique directe) peut diviser l'espace de simulation en 512x256x256 mailles, tandis que le maillage le plus grossier peut diviser ce même espace en 64x32x32 mailles. Le maillage final est donc 512 fois ($8^3$) moins dense que le maillage initial, le plus fin.

Les sommets du maillage le plus grossier peuvent coïncider avec les sommets du maillage initial, le plus fin, notamment dans le cas de maillages réguliers.

Ce filtrage consiste à « agréger » le comportement de la combustion tel que modélisé sur le maillage le plus fin, sur un plus petit nombre de maillage. Autrement dit, il s'agit d'affecter les valeurs de variable de progrès et les quantités de combustion locale les mieux représentatives de la zone couverte par chaque sommet de maille.

Par exemple, pour une quantité Q, on peut produire une quantité filtrée $\overline{Q}$

$$\overline{Q(x,t)} = \int_\Delta F_\Delta(x - x').Q(x',t)\,dx'$$

Cette quantité Q peut être la variable de progrès c, la densité de surface de la flamme $\Sigma$ ou tout autre estimation de la quantité de combustion locale.

$F_\Delta$ représente un filtre spatial appliqué au champ de valeurs Q(x',t) sur un voisinage $\Delta$, x, x' représentant des coordonnées dans l'espace de simulation. Le point de coordonnées x' se trouve dans le voisinage défini par $\Delta$ du point de coordonnées x.

Ces données filtrées $\overline{c}$ et $\overline{\Sigma}$ peuvent être utilisées pour l'entrainement d'un réseau de neurones multicouche 10.

Pour ce faire, on forme un ensemble d'apprentissage associant un graphe correspondant à ce maillage « grossier » à des quantités de combustion locale filtrées $\overline{\Sigma}$ en chaque sommet de ce graphe.

Les sommets du graphe ont pour valeur celles de la variable de progrès filtrée $\overline{c}$. Dans la suite, par clarté, les termes « filtrés » pourront être omis car implicites.

Selon un mode de réalisation, de l'invention, les sommets du graphe correspondent aux sommets du maillage. Toutefois d'autres modes de réalisation sont possibles, comme par exemple considérer le graphe dual, c'est-à-dire le graphe dont les sommets correspond aux mailles (ou cellules) du maillage et non pas à ses sommets.

L'ensemble d'apprentissage peut être constitué en faisant varier les différents instants d'une simulation temporelle, en faisant varier les conditions initiales, en faisant varier les conditions de bord, etc. Ces variations permettent de générer des simulations numériques directes différentes qui permettent de peupler cet ensemble d'apprentissage et de lui apporter une robustesse et stabilité aux variations de ces paramètres en phase d'inférence.

Il est important de noter que l'entrée du réseau de neurones multicouche 10 n'est pas un vecteur de valeurs de la variable de progrès $\bar{c}$, mais un graphe dont les sommets portent ces valeurs.

En effet, considérer un graphe, plutôt qu'un vecteur, permet de prendre en compte le caractère adaptatif et non-régulier du maillage. Un vecteur ne permettrait pas de rendre compte que les valeurs ne correspondent pas à des points régulièrement espacés dans l'espace, alors même que ces valeurs dépendent précisément de leur localisation.

En considérant un graphe en entrée, on peut ainsi résoudre cette problématique des réseaux de neurones « conventionnels », y compris les réseaux de neurones de convolution (ou réseaux de neurones convolutifs, ou CNN pour « Convolution Neural Network » en anglais) de ne pouvoir opérer que sur des espaces euclidiens tels que des images (en deux dimensions) ou des textes (séquences unidimensionnelles).

En outre, le graphe prend nativement en compte l'échelle du maillage des données d'entrée. Ainsi, lors de la phase itérative d'inférence (ou prédiction), aucun prétraitement n'est nécessaire pour mettre à l'échelle, ou rediscrétiser, les variables de progrès. Il en résulte un gain très important de la complexité computationnelle de la simulation globale.

Dans cette phase d'apprentissage S2, une fonction de coût 50 est appliquée pour comparer la sortie du réseau de neurones multicouche 10 à la sortie désirée représentée par la quantité de combustion locale correspondant fournie par la simulation numérique directe et filtrée. Cette fonction de coût (ou « loss function » en anglais) peut être classique en soi, par exemple basée sur une erreur quadratique moyenne (MSE pour « Mean Squared Error » en anglais) entre les deux valeurs à comparer.

Classiquement, le résultat de cette comparaison (une erreur) peut être introduit dans le réseau de neurones multicouche afin d'en faire évoluer les paramètres, typiquement les poids synaptiques. La méthodologie de modification de ces poids peut être basé sur l'algorithme de rétropropagation du gradient de l'erreur.

Le réseau de neurones multicouche 10 est adapté afin de pouvoir prendre en compte un graphe en donnée d'entrée.

Le graphe en entrée peut être défini comme une structure de données comportant un ensemble de sommets distincts (ou nœuds ou « vertices » en anglais) et un ensemble d'arrêtés reliant deux sommets.

Un tel réseau de neurones multicouche 10 peut se baser sur les travaux initiés par Scarselli, Franco; Gori, Marco; Tsoi, Ah Chung; Hagenbuchner, Markus; Monfardini, Gabriele (2009). "The Graph Neural Network Model". IEEE Transactions on Neural Networks. 20 (1): 61-80. doi:10.1109/TNN.2008.2005605. ISSN 1941-0093. PMID 19068426. S2CID 206756462.

La page Wikipedia relative aux réseaux de neurones graphiques (GNN pour « Graph Neural Networks ») donne également explications et pointeurs : https://en.wikipedia.org/wiki/Graph neural network

On peut associer un neurone à chaque sommet, ou nœud, du graphe. La valeur associée au neurone correspond à la variable de progrès associée à ce sommet.

Un tel réseau de neurones prend en compte la nature de graphe des entrées en calculant l'état d'un neurone à partir des états des neurones d'un voisinage déterminé par le graphe.

Ce voisinage peut se limiter (ou pas) aux nœuds immédiatement voisins.

Ainsi, les entrées du réseau de neurones prennent nativement en compte le caractère local des données de combustion. L'organisation de ces données sous forme de graphe permet d'isoler les données pertinentes pour chaque nœud qui sont limités à l'état des nœuds d'un voisinage local.

En ne considérant que des positions relatives en termes de voisinage dans un maillage, indépendamment des positions absolues dans l'espace de la chambre de combustion, la structure de données formée par le graphe est en outre invariante aux translations et aux rotations.

On comprend, pour les translations, que seules les positions relatives des sommets du maillage, en termes de liens dans le graphe, sont pertinentes.

Par ailleurs, si on retourne la chambre de combustion, celle-ci doit fonctionner pareillement dans la mesure où l'on néglige les effets de la gravitation. Une rotation est effectivement sans effet sur les positions relatives des sommets du graphe.

Il apparaît que cette structure permet d'une part d'éviter de capturer des données inutiles (puisque ne représentant pas une réalité physique pertinente) qui nuiraient à la bonne convergence du réseau de neurones, mais aussi de capturer la même information globale avec beaucoup moins de degré de liberté. Ainsi, on peut estimer qu'un réseau de neurones graphique, tel que pouvant être utilisé dans le cadre de l'invention, a environ 7000 paramètres, alors qu'un réseau de neurones de convolution de type U-net en possède plusieurs millions.

Le processus est typiquement itératif, afin que petit à petit la sortie converge vers un état stable représentatif de l'ensemble du graphe. Cette sortie est, dans notre cas, également un graphe, mais dont les valeurs associées aux nœuds correspondent aux quantités de combustion partielle.

Quoique l'influence de la valeur d'un nœud soit limitée par la notion de voisinage, le fait de prévoir un réseau multicouche permet à cette influence de se propager sur le graphe, couche après couche. Entre autre, le caractère principalement local du phénomène de combustion permet de bonnes performances même avec un nombre de couches pas trop élevé. Ainsi, un réseau de 4 couches atteint des scores équivalents à ceux qui peuvent être atteint avec un réseau convolutif de type U-Net.

Ainsi, la valeur $h_i^{r+1}$ associée à un neurone (ou sommet) i, à la couche r+1 dépend des valeurs associées aux neurones du voisinage $\mathcal{N}(i)$ de ce neurone i à la couche précédente (ce voisinage étant défini par le graphe) et des poids synaptiques W liant les neurones entre eux.

Les sommets (ou neurones) en dehors de ce voisinage n'influencent pas le neurone considéré et ne contribuent pas au calcul de sa valeur de sortie.

Selon un mode de réalisation, on peut écrire :

$$h_i^{r+1} = \rho \left( \sum_{j \in \mathcal{N}(i)} W h_j^r \right)$$

où $\rho$ représente une fonction d'activation, par exemple de type ReLU (pour « Rectified Linear Unit » en anglais, ou Unité Linéaire Rectifiée).

Selon un mode de réalisation préférentiel, on peut mettre en œuvre un mécanisme d'attention selon lequel l'influence des neurones voisins est variable. Ainsi, pour un neurone i, on peut définir une attention $\alpha_{i,j}$ pour l'ensemble des neurones voisins $j \in \mathcal{N}(i)$. Un tel type de réseau peut être conforme au modèle « Graph Attention Networks » de Petar Velickovic et al., 2018, arXiv:1710.10903.

L'expression précédente peut alors s'écrire :

$$h_i^{r+1} = \rho \left( \sum_{j \in \mathcal{N}(i)} \alpha_{i,j} W h_j^r \right)$$

L'attention $\alpha_{i,j}$ peut par exemple s'exprimer par :

$$\alpha_{ij}^r = softmax(e_{i,j}^r) = \frac{exp(e_{i,j}^r)}{\sum_{k \in \mathcal{N}(i)} exp(e_{i,k}^r)}$$

où « exp » représente la fonction exponentielle, et les valeurs $e_{i,j}^r$ et $e_{i,k}^r$ représentent un score d'attention du neurone j, respectivement k, pour le neurone i.

Ce score d'attention dépend des valeurs prises par ces neurones voisins et d'un vecteur d'attention $\vec{a}^r$ Il représente l'importance de la valeur du neurone j pour le neurone i.

Selon un mode de réalisation, il peut s'exprimer par :

$$e_{i,j}^r = LeakyReLU \left( \vec{a}^{r^T} \left( W^r h_i^r \| W^r h_j^r \right) \right)$$

où

- $_\tau$ représente la transposition matricielle,
- $.\|.$ représente l'opértion de concaténation.

LeakyReLU est une fonction d'activation de type ReLU (pour « Rectified Linear Unit » en anglais, ou Unité Linéaire Rectifiée) mais dérivable :

La fonction ReLU f se définit par f(x)=max(0,x) pour tout réel x

La fonction Leaky ReLU (littéralement Unité Linéaire Rectifiée « Perméable ») se définit par f(x)=max(ε.x, x) pour tout réel x. Le paramètre ε est un réel strictement positif et inférieur à ε∈]0,1[. La dérivée est alors égale à ε lorsque x est strictement négatif, ce qui permet de conserver la mise à jour des poids d'un neurone utilisant cette fonction d'activation.

En présentant l'ensemble d'apprentissage précédemment décrit à un tel réseau de neurones, et par l'utilisation de la fonction de coût et d'un algorithme de mise à jour des poids (par exemple de type rétropropagation du gradient de l'erreur), on peut fixer les poids W et $\vec{a}$. Ces différents poids déterminent l'état du réseau de neurones multicouche et modélisent les connaissances acquises lors de l'entrainement.

Dans une étape S3, le modèle instancié par le réseau de neurones multicouche peut être exploité, en couplage avec un solveur afin de simuler une chambre de combustion définie par de nouveaux paramètres.

En particulier, le réseau de neurones multicouche ainsi entraîné peut prédire des quantités de combustion locales en fonction de nouvelles valeurs de variables de progrès, par généralisation (c'est-à-dire même si ces valeurs ne faisaient pas parties de l'ensemble d'apprentissage).

La figure 6 illustre le couplage mis en place entre un solveur 30 et le réseau de neurones multicouche 10, précédemment entraîné, pour cette phase de simulation S3.

Le réseau de neurones multicouche 10 fonctionne comme un substitut d'une partie des calculs du solveur 30 qui modélise une partie de la physique simulée, en l'occurrence le lien entre la composition locale des gaz (estimée par la variable de progrès) et la quantité de combustion (estimée par exemple par la densité de surface de flamme). Ce lien étant appris dans l'étape d'apprentissage S2, il est possible de décharger le solveur de cette partie et de le laisser gérer d'autres aspects (dynamique des fluides, turbulences...).

Cette simulation est un processus itératif dans lequel les entrées du solveur comprennent les sorties du réseau de neurones, et, réciproquement, les entrées du réseau de neurones 10 sont constitués des sorties du solveur 30.

Plus précisément, on fournit en entrée du solveur 30 les valeurs prédites par le réseau de neurones multicouche 10 d'une quantité de combustion locale (par exemple une densité de surface de flamme), aux sommets du maillage. Le solveur 30 fournit alors une variable de progrès en chaque sommet du maillage.

On fournit au réseau de neurones multicouche 10 un graphe correspondant aux sommets du maillage. Chaque sommet possède une valeur de la variable de progrès, obtenu par le solveur 30. Le réseau de neurones multicouche fournit des valeurs prédites de la quantité de combustion locale (par exemple une densité de surface de flamme) en ces sommets.

Selon un mode de réalisation, le solveur utilisé pour la simulation peut être un solveur pour simulation aux grandes échelles. La simulation aux grandes échelles (LES pour « *Large Eddy Simulation* » en anglais) se base sur un maillage plus grossier, ainsi que précédemment expliqué. Ce maillage « grossier » correspond à celui sur lequel a été effectué l'apprentissage dans la phase S2, après filtrage de la simulation numérique directe.

Un des avantages de l'invention est de permettre un maillage relativement lâche tout en conservant des propriétés de précision et de convergence des techniques de mécanique des fluides numérique. L'avantage d'utiliser un maillage lâche est bien sûr de réduire le coût computationnel de la simulation. L'invention permet donc de garantir un même niveau de précision de la simulation que les solutions connues de l'état de la technique, mais avec un coût computationnel moindre.

Le gain sur le coût computationnel permet de, sur une durée constante, tester un plus grand nombre de jeux de paramètres pour la chambre de combustion, et donc, d'obtenir une meilleure optimisation, ou bien d'attendre un même degré d'optimisation en un temps moindre.

En effet, les simulations numériques directes (DNS) tournent sur des calculateurs hautes performances (ou « *high performance computing* », HPC, en anglais), avec plusieurs centaines de nœuds de calcul en plusieurs jours. En comparaison, une simulation aux grandes échelles, LES, couplée au réseau de neurones multicouche tourne sur une poignée de nœuds de calcul en quelques minutes.

La simulation des grandes structures de la turbulence (SGS ou en anglais LES pour Large Eddy Simulation) est une méthode utilisée en modélisation de la turbulence. Elle consiste à filtrer les petites échelles qui sont modélisées et en calculant directement les grandes échelles de la cascade turbulente.

Cette méthode a été introduite par Joseph Smagorinsky en 1963 dans J. S. Smagorinsky, « General Circulation Experiments with the Primitive Equations: I. The basic Experiment », Monthly Weather Revue, vol. 91, no 3, 1963, p. 99-16. Elle permet de calculer un écoulement turbulent en capturant les grandes échelles pour un coût raisonnable. Le milieu aux petites échelles étant raisonnablement supposé isotrope peut être décrit par une méthode simple.

Les outils de simulation précédemment évoqués proposent des modules, ou solveurs, permettant d'effectuer une telle simulation aux grandes échelles.

Au fil des itérations, la simulation converge, c'est-à-dire qu'une mesure de distance entre deux états consécutifs varie peu. L'état final fournit la simulation de la combustion dans la chambre à combustion considérée.

La sortie du solveur 30 comporte, comme on l'a vu, les variables de progrès simulés (qui sont réintroduites vers le réseau de neurones 10), mais d'autres paramètres sont, d'une façon générale, également simulés.

Une possible étape S4 peut consister à déterminer un ensemble de paramètres de conception de la chambre de combustion à partir des résultats de la phase itérative de simulation S3 pour une pluralité d'ensemble de paramètres de conception envisagés.

Pour ce faire, il est possible d'analyser les résultats de la simulation effectuée, et de tester de nouveaux ensembles de paramètres envisagés de la chambre de combustion en lançant une nouvelle simulation, S3.

Un but possible est de rechercher le jeu de paramètres de conception qui permet d'optimiser un profil de température en sortie de la chambre pour obtenir les températures les plus élevées mais sous les limites des matériaux constitutifs de la chambre de combustion.

On peut alors concevoir une chambre de combustion en choisissant le jeu de paramètres de conception correspondant à la simulation ayant fourni les « meilleurs » résultats selon les critères choisis.

Optionnellement, une fois un choix de paramètres effectué, une simulation numérique directe (DNS) peut être effectuée afin de confirmer les résultats et valider ce jeu de paramètres pour la conception de la chambre.

Une chambre de combustion conçue selon ce jeu de paramètres peut alors être produite.

Ainsi, l'étape de simulation S3 peut permettre de parcourir un espace de jeux de paramètres important, afin de choisir un jeu optimal et lancer la production effective.

Le coût calculatoire est déporté vers la phase d'apprentissage S2. La phase de simulation S3 s'en trouve allégée, ce qui permet d'essayer un grand nombre de jeux de paramètres (boucle S4 vers S3, sans surcoût important).

Le couplage avec le réseau de neurones multicouche 10 permet par ailleurs au solveur aux grandes échelles 30 de stabiliser sa convergence et d'atteindre une précision des résultats simulés supérieures aux solutions connues de l'état de la technique.

Bien entendu, la présente invention n'est pas limitée aux exemples et au mode de réalisation décrits et représentés, mais est définie par les revendications. Elle est notamment susceptible de nombreuses variantes accessibles à l'homme de l'art.

**Revendications**

1. Procédé de simulation de la combustion d'un fluide dans une chambre de combustion, pour la conception de ladite chambre de combustion, comportant

   - la discrétisation (S1) de l'espace de ladite chambre de combustion en un maillage donné,
   - une phase d"entrainement (S2) d'un réseau de neurones multicouche (10) au moyen d'un ensemble d'apprentissage associant un graphe correspondant audit maillage donné dont les sommets ont pour valeur des variables de progrès prédites par une simulation de mécanique des fluides numérique (20), à des quantités de combustion locale auxdits sommets, et selon une fonction de coût (50) configurée pour minimiser une erreur entre la sortie dudit réseau de neurones et lesdites quantités de combustion locale ;
   - Une phase itérative de simulation (S3) de ladite combustion dans laquelle, à chaque itération,

      - on fournit en entrée d'un solveur (30) les valeurs prédites par ledit réseau de neurones multicouche (10) d'une quantité de combustion locale aux sommets dudit maillage donné, afin d'obtenir une valeur d'une variable de progrès en chaque sommet dudit maillage,
      - on fournit audit réseau de neurones multicouche un graphe correspondant aux sommets dudit maillage donné, chaque sommet ayant une valeur respective de ladite variable de progrès, obtenu par ledit solveur, afin d'obtenir des valeurs prédites de ladite quantité de combustion locale auxdits sommets.

2. Procédé selon la revendication 1 dans lequel ladite quantité de combustion locale est approximée par une densité surfacique de flamme.

3. Procédé selon l'une des revendications précédentes, comportant une étape de discrétisation dudit espace en un second maillage, substantiellement plus fin que ledit maillage donné, et dans lequel ladite phase d'entrainement comprend une simulation numérique directe (20) de ladite combustion, afin d'obtenir lesdites variables de progrès et lesdites quantités de combustion locale aux sommets dudit second maillage, puis un filtrage (40) afin d'obtenir lesdites variables de progrès et lesdites quantités de combustion locale aux sommets dudit maillage donné.

5. Procédé selon l'une des revendications précédentes, dans lequel les nœuds dudit graphe correspondent aux sommets dudit maillage donné.

6. Procédé selon l'une des revendications précédentes, dans lequel ledit solveur (30) effectue une simulation aux grandes échelles

7. Procédé selon l'une des revendications précédentes dans lequel ledit réseau de neurones multicouche (10) prend en compte ledit graphe en calculant l'état d'un neurone à partir des états des neurones d'un voisinage déterminé par ledit graphe.

8. Procédé selon la revendication précédente, dans lequel l'état d'un neurone est calculé en fonction d'une influence desdits neurones voisins variable selon lesdits neurones voisins.

9. Procédé selon l'une des revendications précédentes, comportant en outre une étape (S4) de détermination d'un ensemble de paramètres de conception de ladite chambre de combustion à partir des résultats de ladite phase itérative de simulation (S3) pour une pluralité d'ensemble de paramètres de conception envisagés.

10. Dispositif de simulation de la combustion d'un fluide dans une chambre de combustion, pour la conception de ladite chambre de combustion, comportant

   - des moyens pour la discrétisation de l'espace de ladite chambre de combustion en un maillage donné,
   - des moyens pour entrainer un réseau de neurones multicouche (10) au moyen d'un ensemble d'apprentissage associant un graphe correspondant audit maillage donné dont les sommets ont pour valeur des variables de progrès prédites par une simulation de mécanique des fluides numérique (20), à des quantités de combustion locale auxdits sommets, et selon une fonction de coût (50) configurée pour minimiser une erreur entre la sortie dudit réseau de neurones et lesdites quantités de combustion locale ;
- un solveur (30) adapté pour recevoir en entrée les valeurs prédites par ledit réseau de neurones multicouche (10) d'une quantité de combustion locale aux sommets dudit maillage donné, afin d'obtenir une valeur d'une variable de progrès en chaque sommet dudit maillage donné,
- ledit réseau de neurones multicouche étant adapté pour recevoir en entrée un graphe correspondant aux sommets dudit maillage donné, chaque sommet ayant une valeur respective de ladite variable de progrès, obtenu par ledit solveur, afin d'obtenir des valeurs prédites de ladite quantité de combustion locale auxdits sommets.

**Fig. 1**

**Fig. 2**

S1

S2

S3

S4

**Fig. 3**

Fig. 4

Fig. 5

Fig. 6

**EP 4 250 167 A1**

Europäisches
Patentamt
European
Patent Office
Office européen
des brevets

**RAPPORT DE RECHERCHE EUROPEENNE**

Numéro de la demande

**EP 22 16 3424**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | RICARDO VINUESA ET AL: "The Potential of Machine Learning to Enhance Computational Fluid Dynamics", ARXIV.ORG, CORNELL UNIVERSITY LIBRARY, 201 OLIN LIBRARY CORNELL UNIVERSITY ITHACA, NY 14853, 5 octobre 2021 (2021-10-05), XP091072727, * le document en entier * | 1-3,5-10 | INV. G06F30/23 G06F30/27 G06F30/17 G06F30/15 |
| X | US 2021/365616 A1 (GORET GAËL [FR] ET AL) 25 novembre 2021 (2021-11-25) * le document en entier * | 1-3,5-10 | |
| X | US 9 183 328 B2 (ENGINE SIMULATION PARTNERS LLC [US] ET AL.) 10 novembre 2015 (2015-11-10) * le document en entier * | 1-3,5-10 | |
| X | JIAN AN ET AL: "A Deep Learning Framework for Hydrogen-fueled Turbulent Combustion Simulation", ARXIV.ORG, CORNELL UNIVERSITY LIBRARY, 201 OLIN LIBRARY CORNELL UNIVERSITY ITHACA, NY 14853, 1 mars 2020 (2020-03-01), XP081611914, * le document en entier * | 1-3,5-10 | DOMAINES TECHNIQUES RECHERCHES (IPC) G06F |
| X | US 2021/150106 A1 (LIMOTTA III MICHAEL R [US]) 20 mai 2021 (2021-05-20) * le document en entier * | 1-3,5-10 | |

Le présent rapport a été établi pour toutes les revendications

| Lieu de la recherche | Date d'achèvement de la recherche | Examinateur |
|---|---|---|
| Berlin | 1 septembre 2022 | de la Torre, David |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 16 3424

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-09-2022

| Document brevet cité au rapport de recherche | Date de publication | Membre(s) de la famille de brevet(s) | Date de publication |
|---|---|---|---|
| US 2021365616 A1 | 25-11-2021 | EP 3913519 A1 | 24-11-2021 |
| | | FR 3110731 A1 | 26-11-2021 |
| | | US 2021365616 A1 | 25-11-2021 |
| US 9183328 B2 | 10-11-2015 | EP 2771837 A1 | 03-09-2014 |
| | | JP 6049746 B2 | 21-12-2016 |
| | | JP 2014532925 A | 08-12-2014 |
| | | US 2013297267 A1 | 07-11-2013 |
| | | WO 2013063433 A1 | 02-05-2013 |
| US 2021150106 A1 | 20-05-2021 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CORENTIN J. LAPEYRE ; ANTONY MISDARIIS ; NICOLAS CAZARD ; DENIS VEYNANTE ; THIERRY POINSOT.** Training convolutional neural networks to estimate turbulent sub-grid scale reaction rates. *Combustion and Flame,* 2019, vol. 203, ISSN 0010-2180, 255-264
- **LECUN, YANN A. et al.** Efficient backprop. Neural networks: Tricks of the trade. Springer, 2012, 9-48
- **DIEDERIK P. KINGMA ; JIMMY LEI BA.** Adam: A method for stochastic optimization. *arXiv,* 2014, vol. 1412, 6980v9
- **TIJMEN TIELEMAN ; GEOFFREY HINTON.** Lecture 6.5-rmsprop: Divide the gradient by a running average of its recent magnitude. *COURSERA: neural networks for machine learning,* 2012, vol. 4 (2), 26-31
- Computational Meshing for CFD Simulations. **A. LINTERMANN.** Clinical and Biomedical Engineering in the Human Nose - A Computational Fluid Dynamics Approach. Springer Nature Singapore Pte Ltd, 2021
- Biological and Medical Physics. *Biomedical Engineering,* 2020, 85-115
- **AIMAD ER-RAIY.** Étude des processus élémentaires impliqués en combustion à volume constant. *ISAE-ENSMA École Nationale Supérieure de Mécanique et d'Aérotechnique - Poitiers,* 2018
- **S. B. POPE.** The evolution of surfaces in turbulence. *International journal of engineering science,* 1988, vol. 26 (5), 445-469
- **ORSZAG, STEVEN A.** Analytical Theories of Turbulence. *Journal of Fluid Mechanics,* 1970, vol. 41, 363-386
- **SCARSELLI, FRANCO ; GORI, MARCO ; TSOI, AH CHUNG ; HAGENBUCHNER, MARKUS ; MONFARDINI, GABRIELE.** The Graph Neural Network Model. *IEEE Transactions on Neural Networks,* 2009, vol. 20 (1), ISSN 1941-0093, 61-80
- **PETAR VELICKOVIC et al.** Graph Attention Networks. *arXiv,* 2018, vol. 1710, 10903
- **J. S. SMAGORINSKY.** General Circulation Experiments with the Primitive Equations: I. The basic Experiment. *Monthly Weather Revue,* 1963, vol. 91 (3), 99-16